# EUROPÄISCHE PATENTSCHRIFT

(11) **EP 1 315 950 B1**
(45) Veröffentlichungstag und Bekanntmachung des Hinweises auf die Patenterteilung: **25.04.2018**
(21) Anmeldenummer: 01967026.4
(22) Anmeldetag: 25.08.2001
(51) Int. Cl.: F02M 35/02, F02D 41/18, G01F 1/684, G01F 5/00, G01F 15/12

(54) **VORRICHTUNG ZUR BESTIMMUNG ZUMINDEST EINES PARAMETERS EINES STRÖMENDEN MEDIUMS**
DEVICE FOR DETERMINING AT LEAST ONE PARAMETER OF A FLOWING MEDIUM
DISPOSITIF PERMETTANT DE DETERMINER AU MOINS UN PARAMETRE D'UN AGENT A L'ETAT D'ECOULEMENT

(30) Priorität: 30.08.2000 DE 10042400
(43) Veröffentlichungstag der Anmeldung: 04.06.2003
(73) Patentinhaber: ROBERT BOSCH GMBH, 70442 Stuttgart (DE)
(72) Erfinder: LENZING, Thomas, 71726 Benningen (DE); KONZELMAN, Uwe, 71679 Asperg (DE); MARBERG, Henning, 71263 Weil der Stadt (DE)
(86) Internationale Anmeldenummer: PCT/DE2001/003258
(87) Internationale Veröffentlichungsnummer: WO 2002/018886

(56) Entgegenhaltungen:
- WO-A1-01/18497
- WO-A1-01/18499
- DE-A- 19 735 664
- DE-A- 19 815 654
- GB-A- 2 310 383
- US-A- 6 085 587

## Beschreibung

### Stand der Technik

Die Erfindung geht aus von einer Vorrichtung zur Bestimmung zumindest eines Parameters eines strömenden Mediums nach der Gattung des Anspruchs 1.

Aus der DE 197 35 891 A1 ist schon eine Vorrichtung mit einem Messkanal bekannt, in dem ein Messelement untergebracht ist, das dort von dem einströmenden Medium umströmt wird. Der Messkanal ist in einem vorgegebenen Winkel gegenüber einer Leitungslängsachse geneigt, so dass der Einlasskanal einen von einer Hauptströmungsrichtung abgeschatteten Bereich aufweist. Das Messelement ist in dem abgeschatteten Bereich des Messkanals angeordnet, um Verschmutzung und entstehende Defekte des Messelements zu vermeiden.

In Folge eines Wassereintritts in die Ansaugleitung, z. B. durch eine regennasse Fahrbahn, oder durch Partikeleintrag kann es gegebenenfalls zu einer Kontamination des Messelements kommen. In diesem Spritzwasser enthaltene natürliche Anteile an gelösten Salzen rufen dann einen Kennliniendrift des Messelements in Folge Salzkrustenaufbau auf der Membran des Sensorteils hervor. Die Partikel können das Messelement beschädigen oder sogar zerstören. Durch die Neigung des Messkörpers wird zwar ein abgeschotteter Bereich gebildet, es gelangen aber trotzdem Flüssigkeiten oder Partikel in den Messkanal.

Aus der DE 197 38 337 A1 bzw. US-PS 5,892,146 ist ein Hitzdrahtluftmassenmesser bekannt, der strömungsaufwärts des Messelements eine Erhebung hat, die mit einer Wandung der Leitung einteilig ausgebildet ist. Diese Erhebung ist nicht in einem Messkanal ausgebildet und dient nicht zur Ablenkung von Flüssigkeiten oder Partikeln.

Aus der DE 198 15 654 A1 ist eine Messvorrichtung bekannt, bei der ein Messkanal eine Erhebung hat, die das Messelement vor Partikeln abschottet. Jedoch dient diese Erhebung nicht zur Ablenkung von Flüssigkeiten oder Partikeln, so dass diese weiterhin in den Kanal gelangen können.

Aus der DE 197 35 664 A1 bzw. GB 232 85 14 ist schon eine Vorrichtung bekannt, bei der das Messelement innerhalb eines von dem Medium durchströmten Rohrkörpers angeordnet ist, wobei sich ein strömungsaufwärtiges Ende des Rohrkörpers bis in eine Filterkammer erstreckt und dort an einer Mantelfläche Einlassöffnungen aufweist, um eine Beaufschlagung des Messelements durch Schmutzpartikel oder Wassertröpfchen zu vermindern. Besonders bei stark verschmutzter Luft und einem hohen Wasseranteil in der Ansaugluft der Brennkraftmaschine besteht die Gefahr, dass sich der Luftfilter mit Wasser vollsaugt, das dann durch die Filtermatte hindurchtritt und dabei Schmutzpartikel mitnimmt. Auf der strömungsabwärtigen Seite des Luftfilters, der eigentlichen Reinseite, besteht infolgedessen die Gefahr, dass die Ansaugluft wieder von der Filteroberfläche Schmutzpartikel und Wassertröpfchen mitreisst, die dann in unerwünschter Weise an dem Messelement angelagert werden und zu Fehlmessungen oder einem Ausfall des Messelements führen. Der Rohrkörper nach dem Stand der Technik vermindert durch die Anordnung der Einlassöffnungen an der Mantelfläche die Gefahr von Ablagerungen am Messelement, jedoch wird durch eine entsprechend lange Ausbildung des Rohrkörpers ein unerwünschter Druckabfall bewirkt, der zu einer Verminderung der Messempfindlichkeit führt. Ausserdem ist die Verringerung einer Beaufschlagung des Messelements mit Flüssigkeit/Festkörperpartikeln kaum bei einem sehr hohen Flüssigkeitseintrag von etwa 20 Liter/Stunde zu gewährleisten.

Während des Betriebs der Vorrichtung kann es passieren, dass entgegen der Hauptströmungsrichtung in der Luft z.B. Öltröpfchen oder Öldampf mitströmt und das Messelement kontaminiert wird, was die Messeigenschaften deutlich verschlechtert. Gründe für die Rückströmung von Flüssigkeiten sind z. B. pulsierende Strömungen oder der Nachlauf eines Turboladers in der Abstellphase. Ein Schutzgitter, das speziell weitmaschig ausgeführt ist, reicht mit seiner Innenfläche nicht als Kondensationsfläche für die Flüssigkeit aus.

### Vorteile der Erfindung

Die erfindungsgemäße Vorrichtung mit den kennzeichnenden Merkmalen des Anspruchs 1 hat demgegenüber den Vorteil, dass auf einfache Art und Weise das zumindest eine Messelement vor Beaufschlagung mit Flüssigkeiten und Partikeln geschützt ist.

Es ist vorteilhaft, wenn ein Kanal strömungsaufwärts des Messelements eine Erhebung aufweist, die im Medium mitgeführte Flüssigkeiten und Partikel ablenkt und so das Messelement vor Verunreinigung schützt.

Weiterhin vorteilhaft ist es, wenn der Kanal zwischen dem Element zur Ablenkung von Flüssigkeiten und Partikeln und dem Messelement eine Auslassöffnung für die Partikel und Flüssigkeiten aufweist, so dass diese den Kanal verlassen und das Messelement nicht mehr verunreinigen können.

Durch die in den abhängigen Ansprüchen aufgeführten Maßnahmen sind vorteilhafte Weiterbildungen und Verbesserungen der im Anspruch 1 genannten Vorrichtung möglich.

Vorteilhaft ist es, wenn der Kanal eine Ausbuchtung hat, weil dadurch die abgelenkten Flüssigkeiten und Partikel aufgefangen werden und ein Strömungswiderstand im Kanal nicht erhöht wird.

Es ist vorteilhaft, einen Anfangsbereich des Kanals radial zu versetzen, wodurch das Messelement vor den Flüssigkeiten und Partikeln geschützt wird.

Durch ein Ölabweisgitter in zumindest einer Öffnung des Kanals kann auf vorteilhafte Weise verhindert werden, dass Öl in den Kanal eindringt und das Messelement schädigt.

Ein negativer Einfluss von pulsierender Luftströmung, d.h. Rückströmungen in der Leitung, auf das Messverhalten des Messelements kann vorteilhafterweise durch einen Pulsationskanal verringert werden.

### Zeichnung

Ausführungsbeispiele der Erfindung sind in der Zeichnung vereinfacht dargestellt und in der nachfolgenden Beschreibung näher erläutert.

Es zeigen
Figur 1 eine Vorrichtung zur Bestimmung zumindest eines Parameters eines strömenden Mediums im eingebauten Zustand,
Figur 2 einen Einlass-, Umlenk- und Auslasskanal in einem Messgehäuse der erfindungsgemässen Vorrichtung,
Figur 3 einen Schnitt entlang der Linie III-III der Figur 2 für ein erstes Ausführungsbeispiel der Erfindung,
Figur 4 einen Schnitt entlang der Linie IV-IV der Figur 2 für ein zweites Ausführungsbeispiel der Erfindung,
Figur 5 einen Schnitt entlang der Linie V-V der Figur 2 für ein drittes Ausführungsbeispiel der Erfindung,
Figur 6a, b einen Schnitt entlang der Linie VI-VI der Figur 2 für ein viertes und fünftes Ausführungsbeispiel der Erfindung und
Figur 7 ein weiteres Ausführungsbeispiel der Erfindung.

### Beschreibung der Ausführungsbeispiele

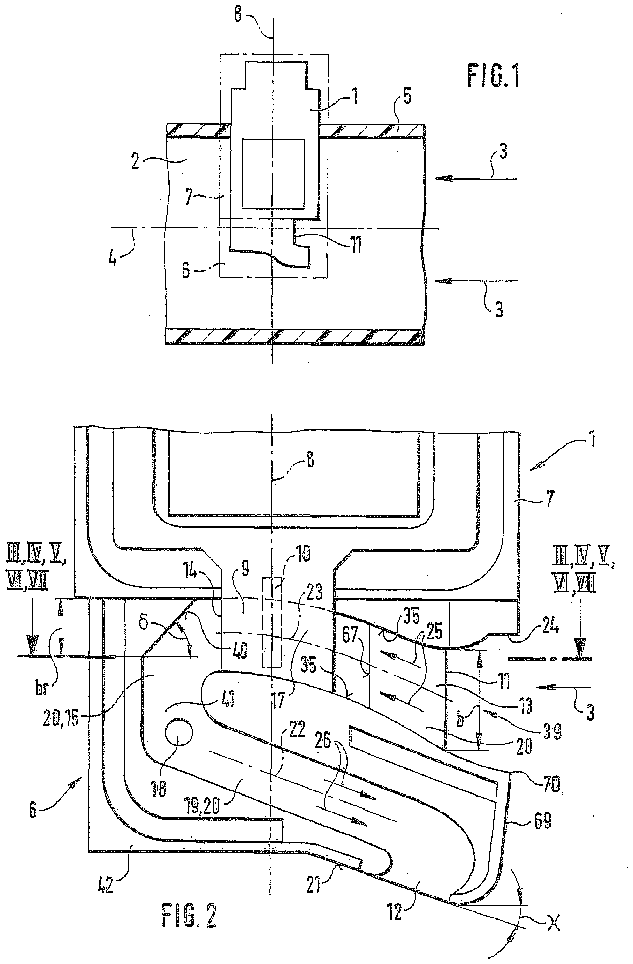

In Figur 1 ist schematisch gezeigt, wie eine Vorrichtung 1 in einer Leitung 2, in der das zu messende Medium strömt, eingebaut ist.

Die Vorrichtung 1 zur Bestimmung zumindest eines Parameters besteht aus einem Messgehäuse 6, gekennzeichnet durch ein unteres strichpunktiert gezeichnetes Rechteck und einem Trägerteil 7, gekennzeichnet durch ein oberes strichpunktiert gezeichnetes Rechteck, in dem z. B. eine Auswerteelektronik untergebracht ist. In diesem Ausführungsbeispiel der Vorrichtung 1 wird ein Messelement (Fig. 2) verwendet, das beispielsweise den Volumenstrom des strömenden Mediums bestimmt. Weitere Parameter, die gemessen werden können, sind beispielsweise der Druck, die Temperatur, eine Konzentration eines Mediumbestandteils oder eine Strömungsgeschwindigkeit, die mittels geeigneter Sensoren bestimmt werden.

Das Messgehäuse 6 und das Trägerteil 7 haben eine gemeinsame Längsachse 8, die in Einbaurichtung verläuft und die z. B. auch die Mittelachse sein kann. Die Vorrichtung 1 ist in eine Wandung 5 der Leitung 2 beispielsweise steckbar eingeführt. Die Wandung 5 begrenzt einen Strömungsquerschnitt der Leitung 2, in dessen Mitte sich in Richtung des strömenden Mediums parallel zur Wandung 5 eine Mittelachse 4 erstreckt. Die Richtung des strömenden Mediums, im Folgenden als Hauptströmungsrichtung bezeichnet, ist durch entsprechende Pfeile 3 gekennzeichnet und verläuft dort von links nach rechts.

Figur 2 zeigt eine beispielhafte Ausführung des Messgehäuses 6 mit einem Kanal 20 ohne einen den Kanal 20 schließenden Deckel (nicht gezeigt). Der Kanal 20 wird durch ein Bodenteil 42 und einen Deckel gebildet. Die Hauptströmungsrichtung 3 des Mediums ist durch Pfeile gekennzeichnet. Der Kanal 20 besteht bspw. aus einem Einlasskanal 13, in den das strömende Medium einströmt, einem Umlenkkanal 15, in den das strömende Medium umgelenkt wird, und einem Auslasskanal 19. Die Strömungsrichtungen 25, 26 im Einlass- 13 und Auslasskanal 19 sind ebenfalls durch Pfeile gekennzeichnet. Eine Einlasskanalmittellinie 23 ist hier beispielsweise gekrümmt, da die Randflächen 35 des Einlasskanals 13 stromlinienförmig ausgebildet sind. Die Auslasskanalmittellinie 22 ist hier beispielsweise eine Gerade.

Der Kanal 20 kann auch ohne Umlenkkanal und Auslasskanal gebildet sein, beispielsweise ein von der Einlassöffnung 11 in Hauptströmungsrichtung 3 leicht gekrümmter oder geradlinig durchgehender Kanal. Jede andere Kanalform ist denkbar, auch ein zur Längsachse 8 senkrechter Verlauf.

In einem vorderen Bereich 39 des Kanals 20 vor einer Einlassöffnung 11, durch die das Medium einströmt, ist beispielsweise ein Strömungshindernis 24 vorgesehen, das eine kanalwirksame, definierte Strömungsablösung bewirkt.

Ein Bug 69 des Messgehäuses 6 ist beispielsweise so geformt, dass feste oder flüssige Teilchen von der Einlassöffnung 11 wegreflektiert werden. Hierfür ist der Bug 69 zum Trägerteil 7 entgegengerichtet geneigt. Im Umlenkkanal 15 ist beispielsweise eine Randfläche 40 um einen Winkel δ entgegen der Hauptströmungsrichtung 3 geneigt. Der Winkel δ kann im Bereich von etwa 30 bis 60° liegen, idealer Weise liegt er bei etwa 45°. Die Randfläche 40 hat eine Breite br, die zumindest zwei Drittel der Breite b der Einlassöffnung 11 des Einlasskanals 13 entspricht.

Im Umlenkkanal 15 ist beispielsweise weiterhin eine Öffnung 18 vorgesehen, die eine Verbindung zu einem die Vorrichtung 1 umströmenden Medium herstellt. Es können auch mehrere Öffnungen sein. Die Öffnung/Öffnungen kann/können sich an Seitenwänden 41 befinden und/oder zu einer unteren Außenfläche 21 des den Kanal 20 aufweisenden Messgehäuses 6 der Vorrichtung 1 führen, um die Verbindung zur Leitung 2 herzustellen, wodurch das Pulsationsverhalten verbessert ist, d.h. die Vorrichtung auch bei pulsierender Medienstörungen genau mißt. Am Ende des Auslasskanals 19 befindet sich eine Auslassöffnung 12, deren Fläche beispielsweise einen Winkel δ mit der Hauptströmungsrichtung 3 bildet, durch die das Medium den Kanal 20 wieder verlässt. Die Auslassöffnung 12 hat beispielsweise einen größeren Querschnitt als der Auslasskanal 19, wodurch das Pulsationsverhalten verbessert ist. Zumindest ein Messelement 10 ist beispielsweise in einem Sensorträger 9 untergebracht, der in den Einlasskanal 13 hineinragt. Der Teil des Kanals 20, in dem das Messelement 10 angeordnet ist, wird auch als Messkanal 17 bezeichnet.

Der Aufbau eines derartigen Messelements 10 ist dem Fachmann z. B. aus der DE 195 24 634 A1 hinreichend bekannt, deren Offenbarung Bestandteil der hier vorliegenden Patentanmeldung sein soll.

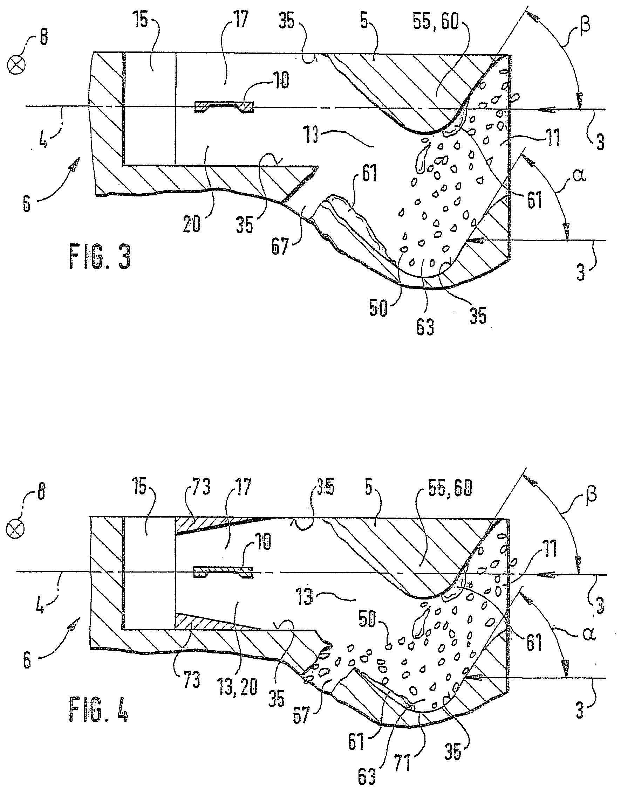

Figur 3 zeigt einen Schnitt entlang der Linie III-III der Figur 2.

In Hauptströmungsrichtung 3 strömt ein Medium, das neben Gasbestandteilen, wie z. B. Luft auch andere Bestandteile wie Flüssigkeitspartikel 50 oder Staubpartikel enthalten kann. Wenn diese Partikel zu dem Messelement 10 gelangen, können sie dieses schädigen. Um das zu verhindern, ist strömungsaufwärts des Messelements 10 ein Element 55 zur Partikelablenkung angeordnet. Das Element 55 ist eine Erhebung 60. In Hauptströmungsrichtung 3 einströmende Flüssigkeitspartikel 50 und andere Partikel treffen auf diese Erhebung 60, die das Messelement 10 in Hauptströmungsrichtung 3 zumindest teilweise abschattet, und die Partikel ablenkt, so dass sie sich am Messelement 10 vorbeibewegen oder schon stromaufwärts des Meßelements 10 durch eine beispielsweise vorhandene Partikelauslassöffnung 67 den Kanal 20 verlassen. Zum Teil bildet sich auf der Erhebung 60 ein Flüssigkeitswandfilm 61, der an der Kuppe der Erhebung als großer Tropfen durch die Strömung in dem Einlasskanal 13 abreißt und in eine beispielsweise in einer der Erhebung 60 ungefähr gegenüberliegenden Randfläche 35 vorhandene Ausbuchtung 63 des Einlasskanals 13 mitgerissen wird. Die Ausbuchtung 63 ist beispielsweise ungefähr der äusseren Form der Erhebung 60 angepasst. In der Ausbuchtung 63 bildet sich ebenfalls ein Flüssigkeitswandfilm 61, den die Mediumstörmung nach stromabwärts entlang der Randfläche 25 fortbewegt. Strömungsabwärts der Ausbuchtung 63, aber zumindest vor oder auf gleicher axialer Länge mit dem Messelement 10, befindet sich beispielsweise die Partikelauslassöffnung 67, durch die die Partikel, insbesondere die Flüssigkeitspartikel 50, den Einlasskanal 13 wieder verlassen können. Das Messelement 10 wird so vor einer Partikelbeaufschlagung geschützt. Die Partikelauslassöffnung 67 ist hier zwischen einem ebenen Bereich der Wand 35 und einem gekrümmten Bereich der Wand 35 angeordnet. Die Partikel verlassen den Einlasskanal 13 zum Teil auch direkt nach einer Ablenkung durch das Element 55 oder durch die Erhebung 60.

Eine der Mediumströmungen entgegen gerichtete Anströmfläche der Erhebung 60 bildet mit der Hauptströmungsrichtung 3 einen Schnittwinkel β. Die Ausbuchtung 63 bildet mit der Hauptströmungsrichtung 3 einen Schnittwinkel α. Die Schnittwinkel liegen im Bereich von 0 bis 90°, d.h. die Erhebung 60 bzw. die Ausbuchtung 63 sind in Hauptströmungsrichtung 3 geneigt ausgebildet.

Figur 4 zeigt einen Schnitt entlang der Linie IV-IV der Figur 2.

Dieses Ausführungsbeispiel entspricht dem der Figur 3 bis auf die Lage der Partikelauslassöffnung 67. Die Ausbuchtung 63 hat einen Sattelpunkt 71, der den größten Abstand zu einer Ebene hat, die durch die Mittelachse 4 und die Längsachse 8 gebildet wird und in der das Messelement 10 liegt. Die Auslassöffnung 67 kann an jeder Stelle zwischen dem Sattelpunkt 71 und einem strömungsabwärtigen Ende des Messelements 10 angeordnet sein. Hier ist die Partikelauslassöffnung 67 innerhalb eines gekrümmten Bereich der Wand 35 angeordnet.

Auf ungefähr gleicher axialer Höhe des Messelements 10 ist in dem Einlasskanal 13 beispielsweise zumindest ein Verjüngungselement 73 angeordnet, das eine Beschleunigung des strömenden Mediums bewirkt und eine Stabilisierung des Messverhaltens des Messelements 10 bewirkt.

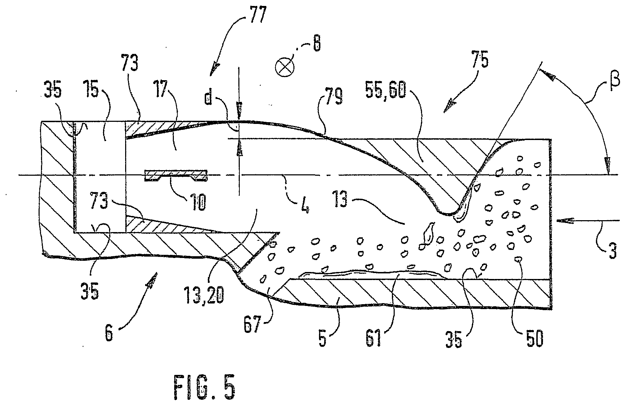

Figur 5 zeigt einen Schnitt entlang der Linie V-V der Figur 2 für ein weiteres Ausführungsbeispiel.

Die Wand 35 des Einlasskanals 13 verläuft hier bis auf einen Übergangsbereich 79 parallel zu einer Ebene, die durch die Mittelachse 4 und die Längsachse 8 gebildet ist. Der Einlasskanal 13 hat einen vorderen Bereich 75, der um einen Abstand d in eine Richtung senkrecht zur Mittelachse 4 und Längsachse 8 gegenüber einem hinteren Bereich 77 des Einlasskanals 13 so verschoben ist, dass die Erhebung 60 das Messelement 10 noch mehr abschirmt. Zwischen dem vorderen Bereich 75 und dem hinteren Bereich 77 befindet sich der Übergangsbereich 79, in dem zumindest eine Partikelauslassöffnung 67 auf der Seite der Erhebung 60 gegenüberliegenden Randfläche 35 ausgebildet ist.

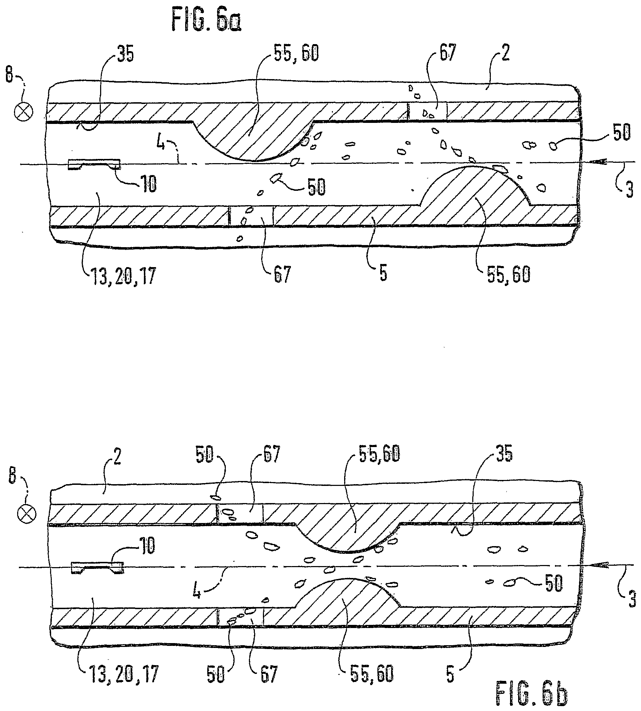

Figur 6a, b zeigt weitere Ausführungsbeispiele der Erfindung. In dem Kanal 20 sind beispielsweise zwei Elemente 55 zur Partikelablenkung angeordnet. Es können auch noch mehr Elemente 55 vorhanden sein. Die Elemente 55 werden beispielsweise durch je eine Erhebung 60 gebildet. Die Erhebungen 60 sind beispielsweise auf gegenüberliegenden Randflächen 35 des Kanals 20 und in Strömungsrichtung 3 hintereinander angeordnet. Beispielsweise für jede Erhebung 60 ist in der Wandung 5 zumindest eine Partikelauslassöffnung 67 vorgesehen, durch die die Fremdpartikel, insbesondere die Flüssigkeitspartikel 50, in die Leitung 2 gelangen können.

Figur 6b zeigt eine weitere Variante der Figur 6a. Hier sind die Elemente 55 ungefähr auf gleicher axialer Höhe im Kanal 20 angeordnet. Dementsprechend sind die zwei Partikelauslassöffnungen 67 gegenüberliegend angeordnet.

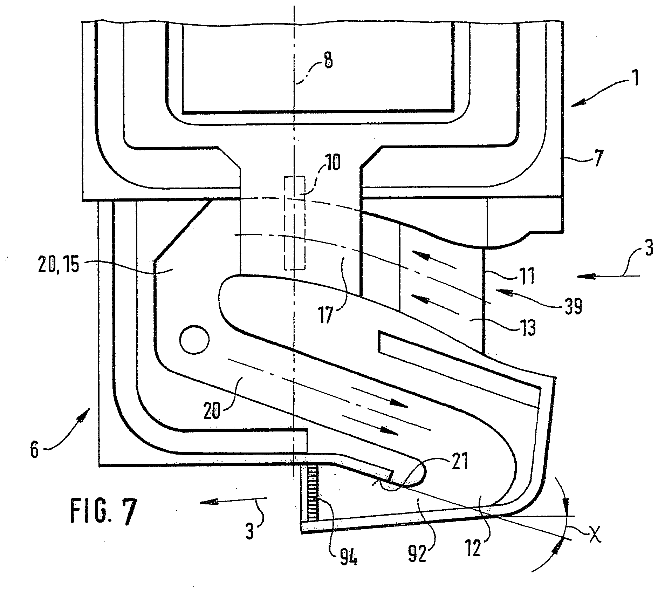

Figur 7 zeigt ein weiteres Ausführungsbeispiel der Erfindung. Im Unterschied zur Figur 2 schließt sich an die Auslassöffnung 12 des Auslasskanals 19 beispielsweise ein Pulsationskanal 92 an. Der Pulsationskanal 92 verbessert das Messverhalten des Messelements 10 während auftretenden Pulsationen in der Leitung 2. Das strömende Medium verlässt den Pulsationskanal 92 beispielsweise in Richtung der Hauptströmungsrichtung 3. Im Bereich eines strömungsabwärtigen Endes des Pulsationskanals 92 ist beispielsweise ein Ölkondensationsgitter 94 angeordnet, das verhindert, dass bei auftretenden Rückströmungen Öl in den Kanal 20 gelangen kann. Dies geschieht dadurch, dass sich auf entsprechend großen Gitterinnenflächen der die Gitteröffnungen bildenden Wandungen das Öl niederschlägt.

Ein oder mehrere Ölkondensationsgitter 94 können auch in jeder anderen Einlass- 11 oder Auslassöffnung 12, 67 angeordnet sein.

## Patentansprüche

1. Vorrichtung (1) zur Bestimmung zumindest eines Parameters eines in einer Leitung (2) entlang einer Hauptströmungsrichtung (3) strömenden Mediums, bestehend aus einem Gas-Partikelgemisch, insbesondere der Ansaugluft für eine Brennkraftmaschine,
mit einem in der Leitung (2) vorgesehenen Messgehäuse (6),
mit zumindest einem im Messgehäuse (6) angeordneten Kanal (20) und mit zumindest einem sich in dem Kanal (20) befindlichen und vom strömenden Medium umströmten Messelement (10),
wobei im Messgehäuse (6) strömungsaufwärts des Messelements (10) in dem Kanal (20) zumindest ein Element (55) zur Ablenkung von in dem Medium vorhandenen Partikeln und Flüssigkeiten angeordnet ist,
**dadurch gekennzeichnet, dass**
zwischen dem zumindest einen Element (55) und dem Messelement (10) zumindest eine Auslassöffnung (67) für Partikeln und Flüssigkeit vorgesehen ist und das zumindest eine Element (55) in dem Kanal (20) durch zumindest eine das Messelement (10) in Hauptströmungsrichtung (3) zumindest teilweise abschattende Erhebung (60) gebildet ist, wobei in den Kanal (20) in Hauptströmungsrichtung einströmende Flüssigkeitspartikel (50) und andere Partikel auf diese Erhebung (60) auftreffen und so abgelenkt werden, dass sie sich am Messelement vorbeibewegen oder stromaufwärts des Messelementes durch die Auslassöffnung (67) für Partikeln und Flüssigkeit den Kanal (20) verlassen.

2. Vorrichtung nach Anspruch 1,
**dadurch gekennzeichnet, dass** die Erhebung (60) mit der Hauptströmungsrichtung (3) einen Schnittwinkel (β) zwischen 90° und 0° bildet.

3. Vorrichtung nach Anspruch 1, **dadurch gekennzeichnet, dass** der Kanal (20) eine Wand (35) hat, und dass die Wand (35) auf ungefähr axialer Länge mit dem zumindest einen Element (55) und diesem gegenüberliegend eine nach außen gerichtete Ausbuchtung (63) hat.

4. Vorrichtung nach Anspruch 1, **dadurch gekennzeichnet, dass** ein vorderer Teil (75) des Kanals (20) gegenüber dem hinteren Teil (77) parallel zur Hauptströmungsrichtung (3) versetzt ist.

5. Vorrichtung nach Anspruch 1, **dadurch gekennzeichnet, dass** der Kanal (20) zumindest eine weitere Auslassöffnung (12) hat und dass die zumindest eine Auslassöffnung (67) oder weitere Auslassöffnung (12) zumindest ein Ölabweisgitter (94) aufweist.

6. Vorrichtung nach Anspruch 1, **dadurch gekennzeichnet, dass** der Kanal (20) folgende Eigenschaften aufweist:
- der Kanal (20) unterteil sich in einen Einlasskanal (13), einen Umlenkkanal (15) und einen Auslasskanal (19),
- der Kanal (20) hat eine Einlassöffnung (11), an die sich der Einlasskanal (13) anschließt, an den sich der Umlenkkanal (15) anschließt, in welches das Medium vom Einlasskanal (13) strömt und umgelenkt wird, um dann durch den Auslasskanal (19) zu zumindest einer an einer Außenfläche (21) des Messgehäuses (6) in die Leitung (2) ausmündenden weiteren Auslassöffnung (12) zu strömen.

7. Vorrichtung nach Anspruch 6, **dadurch gekennzeichnet, dass** sich an die weitere Auslassöffnung (12) zumindest ein Pulsationskanal (92) anschließt.

8. Vorrichtung nach Anspruch 7, **dadurch gekennzeichnet, dass** der Pulsationskanal (92) zumindest ein Ölabweisgitter (94) hat.

## Claims

1. Device (1) for determining at least one parameter of a medium flowing in a line (2) along a main flow direction (3), composed of a gas-particle mixture, in particular the induction air for an internal combustion engine,
having a measuring housing (6) provided in the line (2),
having at least one channel (20) arranged in the measuring housing (6) and having at least one measuring element (10) which is located in the channel (20) and around which the flowing medium flows,
at least one element (55) for deflecting particles and liquids present in the medium being arranged in the measuring housing (6), upstream of the measuring element (10) in the channel (20),
**characterized in that**
at least one outlet opening (67) for particles and liquid is provided between the at least one element (55) and the measuring element (10),
and the at least one element (55) in the channel (20) is formed by at least one bulge (60) at least partly shielding the measuring element (10) in the main flow direction (3), wherein liquid particles (50) flowing into the channel (20) in the main flow direction and other particles strike this bulge (60) and are deflected in such a way that they move past the measuring element or, upstream of the measuring element, leave the channel (20) through the outlet opening (67) for particles and liquid.

2. Device according to Claim 1,
**characterized in that** the bulge (60) forms an angle of intersection (β) between 90° and 0° with the main flow direction (3).

3. Device according to Claim 1, **characterized in that** the channel (20) has a wall (35), and **in that** the wall (35) has an indentation pointing outwards (63) at approximately the axial length of the at least one element (55) and opposite the latter.

4. Device according to Claim 1, **characterized in that** a front part (75) of the channel (20) is offset with respect to the rear part (77), parallel to the main flow direction (3).

5. Device according to Claim 1, **characterized in that** the channel (20) has at least one further outlet opening (12), and **in that** the at least one outlet opening (67) or further outlet opening (12) has at least one oil rejection grid (94).

6. Device according to Claim 1, **characterized in that** the channel (20) has the following properties:
- the channel (20) is divided into an inlet channel (13), a deflection channel (15) and an outlet channel (19),
- the channel (20) has an inlet opening (11), which the inlet channel (13) adjoins, which is adjoined by the deflection channel (15) into which the medium flows from the inlet channel (13) and is deflected, in order then to flow through the outlet channel (19) to at least one further outlet opening (12) on an outer surface (21) of the measuring housing (6), which discharges into the line (2).

7. Device according to Claim 6, **characterized in that** at least one pulsation channel (92) adjoins the further outlet opening (12).

8. Device according to Claim 7, **characterized in that** the pulsation channel (92) has at least one oil rejection grid (94).

## Revendications

1. Dispositif (1) permettant de déterminer au moins un paramètre d'un milieu s'écoulant dans une conduite (2) le long d'une direction d'écoulement principale (3), constitué d'un mélange de particules de gaz, en particulier d'air d'admission pour un moteur à combustion interne, comprenant un boîtier de mesure (6) prévu dans la conduite (2),
comprenant au moins un canal (20) disposé dans le boîtier de mesure (6) et au moins un élément de mesure (10) se trouvant dans le canal (20) et autour duquel circule le milieu en écoulement,
au moins un élément (55) pour dévier les particules et les liquides présents dans le milieu étant disposé dans le boîtier de mesure (6) en amont de l'élément de mesure (10) dans le canal (20),
**caractérisé en ce**
**qu'**entre l'au moins un élément (55) et l'élément de mesure (10) est prévue au moins une ouverture de sortie (67) pour des particules et du liquide et l'au moins un élément (55) dans le canal (20) est formé par au moins un rehaussement (60) obstruant au moins en partie l'élément de mesure (10) dans la direction d'écoulement principale (3), des particules de liquide (50) affluant dans le canal (20) dans la direction d'écoulement principale et d'autres particules venant frapper ce rehaussement (60) et étant déviées de telle sorte qu'elles se déplacent devant l'élément de mesure ou qu'elles quittent le canal (20) en amont de l'élément de mesure à travers l'ouverture de sortie (67) pour les particules et le liquide.

2. Dispositif selon la revendication 1, **caractérisé en ce que** le rehaussement (60) forme avec la direction d'écoulement principale (3) un angle de coupe (β) compris entre 90° et 0°.

3. Dispositif selon la revendication 1, **caractérisé en ce que** le canal (20) présente une paroi (35) et **en ce que** la paroi (35), approximativement dans la longueur axiale de l'au moins un élément (55) et à l'opposé de celui-ci, un renflement (63) orienté vers l'extérieur.

4. Dispositif selon la revendication 1, **caractérisé en ce qu'**une partie avant (75) du canal (20) est décalée par rapport à la partie arrière (77) parallèlement à la direction d'écoulement principale (3).

5. Dispositif selon la revendication 1, **caractérisé en ce que** le canal (20) présente au moins une ouverture de sortie supplémentaire (12) et **en ce que** l'au moins une ouverture de sortie (67) ou ouverture de sortie (12) supplémentaire présente au moins une grille oléofuge (94).

6. Dispositif selon la revendication 1, **caractérisé en ce que** le canal (20) présente les propriétés suivantes :
- le canal (20) se divise en un canal d'entrée (13), un canal de déviation (15) et un canal de sortie (19),
- le canal (20) présente une ouverture d'entrée (11) dans laquelle se raccorde le canal d'entrée (13), auquel se raccorde le canal de déviation (15) dans lequel s'écoule le milieu provenant du canal d'entrée (13), lequel est dévié pour ensuite s'écouler à travers le canal de sortie (19) jusqu'à au moins une ouverture de sortie (12) supplémentaire débouchant au niveau d'une surface extérieure (21) du boîtier de mesure (6) dans la conduite (2).

7. Dispositif selon la revendication 6, **caractérisé en ce qu'**au moins un canal d'impulsion (92) se raccorde à l'ouverture de sortie (12) supplémentaire.

8. Dispositif selon la revendication 7, **caractérisé en ce que** le canal d'impulsion (92) présente au moins une grille oléofuge (94).
